# EUROPEAN PATENT APPLICATION

(11) **EP 1 328 090 A1**
(43) Date of publication of application: **16.07.2003**
(21) Application number: 02290046.8
(22) Date of filing: 09.01.2002
(51) Int. Cl.: H04L 12/56, H04L 12/437, H04L 12/46

(54) **Topology discovery method, a related system and related node**

(71) Applicant: ALCATEL, 75008 Paris (FR)
(72) Inventor: Ooghe, Sven Maurice Joseph, 9000 Gent (BE); Van de Voorde, Ingrid Zulma Benoit, 1861 Wolvertem (BE); De Jaegher, Jeanne Emmanuelle Rita, 1050 Brussels (BE)
(74) Representative: Narmon, Gisèle Marie Thérèse

(57) **Abstract**

The present invention relates to a method for topology discovery in a Resilient Packet Ring. This Resilient Packet Ring comprises a plurality of network nodes which are coupled in a ring topology. Each of the nodes exchange information on the topology of said resilient packet Ring (RPR) and additionally holding said information. The exchanging and holding of this information additionally includes information on a backup node for at least one of said nodes (N1-N8).

## Description

The present invention relates to a Topology discovery method as described in the preamble of claim 1, a related system and node adapted to perform the method as described in the preambles of claim 2 and claim 3 respectively.

Such a subject is already known in the art, e.g. from "The IEEE topology Discovery Standard Proposal with reference 802.17 version 0.7 edited by Jeanne De Jaegher et Al. published in September 2001". Therein, a protocol is described for discovering a topology in a Resilient Packet Ring, further referred to as RPR. This protocol discovers an initial topology of all nodes, called stations in this standard proposal, in the ring and additionally all changes to this topology. The protocol provides each node on the ring with knowledge of the number and arrangement of other nodes on the ring. This information is referred to as the topology image. In order to keep track of the topology, each node keeps a table holding certain topology information. This topology image may be used for routing data-packets of a stream from a first node on the ring towards a second node on the ring.

However, at present there is no mechanism to ensure connectivity at the RPR layer when a RPR node fails. If a RPR node fails the other stations of the ring are informed that the destination cannot be reached. Redirection of the traffic to an existing backup node is left to the upper layer (Multi Protocol Label Switching (MPLS), IEEE802.1D protocols Protocol or Internet Protocol (IP)).

When protection is handled at the Multi Protocol Label Switching or Spanning Tree Algorithm STA level which both are layer 2 protocols, the time needed to do this is significantly higher compared to local protection. For STA, this is of the order of 1-10 seconds and for MPLS, requirements state that recovery should be of the order of tens of ms, although this is not always achievable if no local mechanism is available.

An object of the present invention is to provide a Topology discovery method, a related system and node of the above known type but wherein in a mechanism is provided to ensure connectivity at the RPR layer if an RPR station fails by redirecting of the traffic to an existing backup node performed in a fast way.

According to the invention, this object is achieved by the method described in claim 1, the system described in claim 2 and a node described in claim 3.

Indeed, by exchanging information including information on a backup node of each said nodes (N1-N8) additionally to the exchanging information on the topology of the resilient packet Ring, each of the nodes is kept posted about which node in the resilient packet ring is the backup node of each of the nodes in this ring. In case of failure of a node or a link between nodes, the relevant nodes are aware which node is a back-up node for the failing node (or link) and are as a consequence able to redirect data-packets along a path to this backup node.

An additional characteristic feature of the present invention is the node as described in claim 4.

The resilient packet ring node further comprises a packet handling part PHP that is able to make a decision on forwarding of a data-packet towards the backup node using the topology information stored in the topology information holding part THP. This topology information includes the information on the backup nodes of each of the nodes of the ring and this information is used in forwarding such a data-packet.

A further additional characteristic feature of the present invention is the method as described in claim 5, the system as described in claim 6 and the switching device as described in claim 7.

In this case, at least two resilient packet rings are coupled via a first Switching device (S1) and a second switching device (S2) wherein each of the switches comprises a separate forwarding information holding part (FIHP1, FIHP2) for holding routing information. If a switch is made from an active node to a backup node because of a failure in this active node or in its adjacent links, this switch may additionally require the changing from a first switching device to the second switching device as a backup switching device. Hence, as each switching device may need to operate as a backup switching device of the other switching device, the forwarding information of both switching devices needs to be consistent which is arranged by synchronising the forwarding information of the forwarding information holding part (FIHP1) of the first switching device with the forwarding information of a forwarding information holding part (FIHP2) of the second switching device.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a first Resilient Packet Ring RPR1 connected to a second Resilient Packet Ring RPR2
Fig. 2 represents a node RN of a Resilient Packet Ring RPR 1 or RPR2 as presented in Fig. 1.

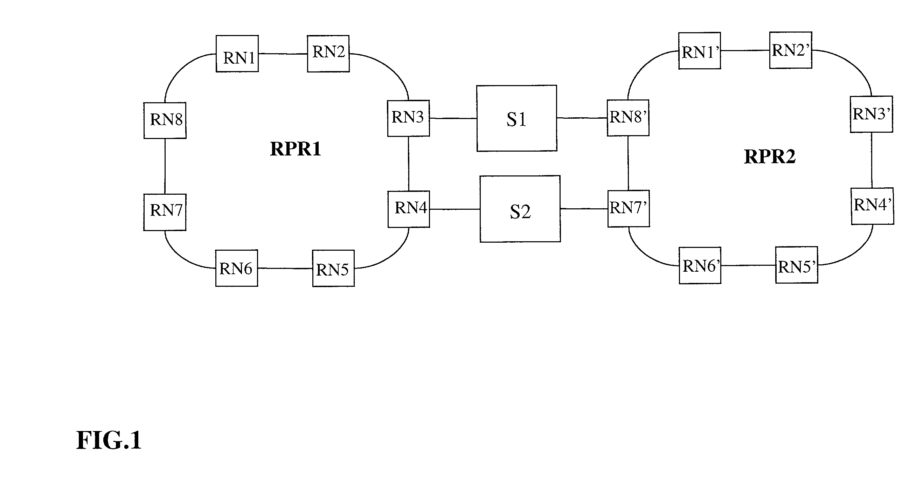

In the following paragraphs, referring to the drawings, an implementation of the method and the related devices according to the present invention will be described. In the first paragraph of this description the main elements of these coupled resilient packet rings as presented in FIG. 1are described. In the second paragraph, all connections between the before mentioned elements and described parts are defined. Subsequently all relevant functional means of the mentioned network elements are described followed by a description of all interconnections. In the succeeding paragraph the actual execution of the method for session establishment is described.

The most relevant network elements are resilient packet Ring Nodes RN1-RN8 having as a main task the forwarding of data-packets form a first node towards a second node. This forwarding is bi-directional and may be performed clockwise or counter-clockwise. The Resilient packet Rings RPR1 and RPR2 as presented in Fig. 1 consists of Resilient Packet Ring nodes RN1-RN8, RN1'- RN8' in this embodiment for reasons of simplicity chosen to be a small number of nodes.

In each of the two RPR rings, the nodes are connected via the Resilient Packet Ring MAC protocol. The path between two nodes on the same ring is established using the Resilient Packet Ring MAC protocol. The path between two rings is established using IEEE 802.1D or MPLS. For the purpose of network resiliency there are two switching devices S1, S2 for coupling both resilient packet rings RPR1, RPR2. Switching device S1 couples node RN3 to node RN8' and switching device S2 in its turn couples node RN4 to node RN7'.

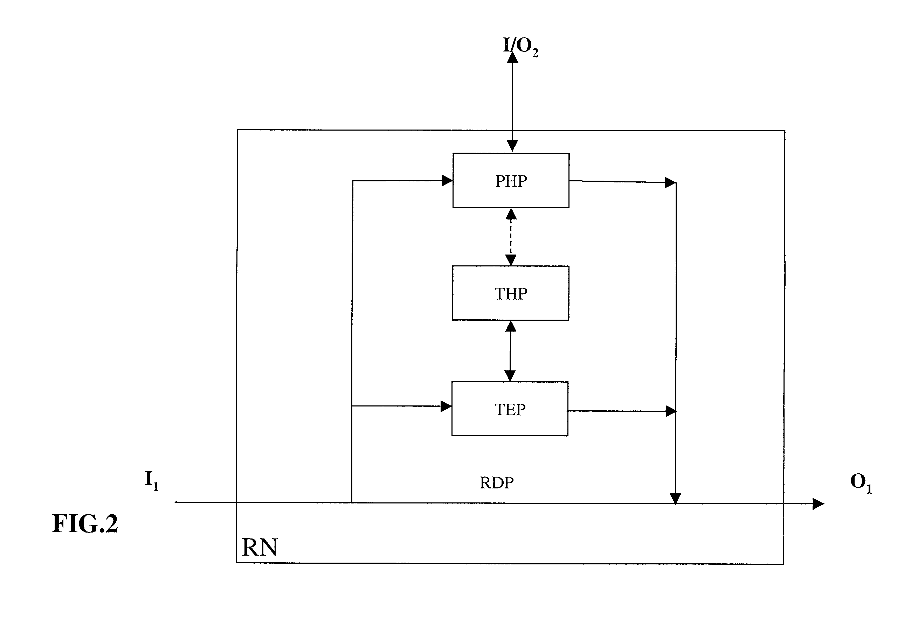

A node RN of such a Resilient Packet Ring is presented in Fig. 2. Essential elements of the Resilient Packet Ring node, further referred to as RN are a topology information holding part THP which is able to hold information on a topology of the entire Resilient Packet Ring RPR. This information is among others meant for forwarding purposes of data packets. This topology information may be the address of a node on the ring and the number of hops to pass in order to reach the destination node in both clockwise and Counter Clock Wise direction.

The topology holding table THP additionally comprises information on a backup node of each the nodes (N1-N8). Additionally, there is a Topology Exchanging Part TEP that is able to update the topology holding table THP in case topology change and to retrieve topology information from the topology holding part to forward this information towards other nodes.

The Packet handling Part PHP is coupled with an input/output to an output/input of the Topology Information Holding Part THP. The packet Handling part PHP additionally has an input/output-terminal that is at the same time an input/output terminal I/O₂ of the node RN. This input/output-terminal I/O₂ is coupled to a higher layer device for receiving higher layer data-packets. The Topology Information Holding Part THP is coupled with an input/output to an output/input of the Topology exchanging part TEP. The Topology exchanging part TEP has an input-terminal that is at the same time an input-terminal I₁ of the node RN and an output-terminal that is at the same time an output-terminal O₁ of the node RN.

The resilient Ring Packet Ring Node RN has an input-terminal I₁ which is at the same time an input-terminal of the Packet Handling Part PHP. The packet handling part PHP has an output-terminal that is at the same time an output-terminal O₁ of the Resilient packet Ring Node RN. Additionally, the ring data path RDP leads along the path between input-terminal I₁ of the node RN and the output-terminal O₁ of the node RN.

Although, the direction of packets in the node RN is only described for a unidirectional data-packet flow, such a node is implemented in a full bi-directional way. Data-packets may be send in clockwise direction or a counter-clockwise direction on the ring.

Additionally, switching device S1, S2 both comprise a forwarding information holding part respectively the forwarding information holding part FIHP1and the forwarding information holding part FIHP2. These forwarding information holding parts are able to store forwarding information which is used for forwarding incoming data-packets by the switching device.

In this case, at least two resilient packet rings are coupled via a first Switching device (S1) and a second switching device S2 wherein each of the switches comprises a separate forwarding information holding part FIHP1, FIHP2 for holding routing information. If a switch is made from an active node to a backup node because of a failure in this active node or in its adjacent link, this switch may additionally require the changing from a first switching device to the second switching device as a backup switching device. Hence, as each switching device S1, S2 may need to operate as a backup switching device of the other switching device, the forwarding information held in both tables FIHP1, FIPH2 of both switching devices needs to be consistent which is arranged by synchronising the forwarding information of the forwarding information holding part FIHP1 of the first switching device S1 with the forwarding information of a forwarding information holding part FIHP2 of the second switching device S2 and vice versa.

In order to explain the operation of the present invention it is assumed that a data-packet, received from a higher layer of node RN1, such as an MPLS layer or a switching layer, is sent from node RN1 towards destination node RN5', normally forwarded along the path of RN1, RN2, RN3, S1, RN8', RN 7', RN6' and RN5'.

However, at a certain moment of time an error occurs at node RN3 which causes this node RN3 to be not available anymore. A new path is to be established towards destination node RN5'.

The topology information holding part of each of the nodes RN1-RN8 do contain for each node of the resilient Packet ring additional to the information on the forwarding of incoming packets the information of the a backup node of each of the nodes. Such topology information holding parts amongst others comprise an entry for node RN3 stating that node RN4 is a backup node of node RN3, and an entry for node RN4 stating that Node RNR3 is a backup node of RN4. This information is introduced in each of the information holding parts in an initial phase wherein the resilient packet ring topology is discovered, for instance by means of broadcasting messages sent by each of the nodes of the ring. Gradually, the information holding parts of each of the nodes of the ring are filled with information on the entire topology of the ring. It is to be noted that the information holding parts of each of the nodes of the ring additionally comprise information on the backup node of each node in case of failure of this node.

At detection that node NR3 has failed it is found in the topology information holding part of node NR1 which forwards the data-packet to destination node RN5', that the data-packets alternatively can be forwarded to the node NR4 which is the backup node of Node RN3. The packet then is forwarded, according to the information in the topology information holding part of node RN1, towards node RN4 following the CCW direction.

When received by RN4 the packet is taken off the ring and is further forwarded to the switching device S2. In the switching device the forwarding table is consulted to find out that the data-packet should be forwarded to node RN7'.

Node RN7' in its turn receives the packet from the switch and at consultation of the topology information holding part finds out that the destination of the data-packet is RN5' and should therefore be forwarded along the path RN6', RN5'. RN5' receives the packet and removes it from the ring. It is further to be remarked that a Resilient Packet Ring usually exists of a large number of nodes, but for reasons of simplicity only a Resilient Packet Ring with a limited number of nodes is described. Each of the nodes RN1-RN8 and RN1'-RN8' may have the same functionality as described for node RN.

It is to be noticed that the consultation of the topology information only is required at reception of a datapacket received from outside of the resilient packet ring, i.e. from a higher layer, such as switching device as is the case in the example described above. Such a switching device may be an Ethernet, RPR or MPLS switch.

In other situations the node only checks the address of the packet and takes it from the ring if the destination address is the node address, otherwise the node forwards the packet.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method for topology discovery in a Resilient Packet Ring (RPR) said Resilient Packet Ring comprising a plurality of network nodes (N1-N8) coupled in a ring topology, each of said nodes (N1-N8) exchanging information on said topology of said resilient packet Ring (RPR) and additionally holding said information **CHARACTERIZED IN THAT** said exchanging and holding said information additionally includes information on a backup node for at least one of said nodes (N1-N8).

2. System for topology discovery in a Resilient Packet Ring, said Resilient Packet Ring comprising a plurality of network nodes (N1-N8) coupled in a ring topology, each of said nodes (N1-N8) comprising:
a. exchanging means for exchanging information on said topology of said resilient packet Ring (RPR); and
b. topology information holding means for holding information on a topology of said Resilient Packet Ring (RPR1) **CHARACTERIZED IN THAT** said exchanging means additionally is adapted to exchange information on a backup node for at least one of said nodes (N1-N8) and that said at least one of said topology holding table additionally is adapted to hold said information on said backup node for at least one of said nodes (N1-N8).

3. Node (N1-N8) in Resilient Packet Ring (RPR) comprising a plurality of network nodes (N1-N8) coupled in a ring topology, said node (N1-N8) comprising:
a. an exchanging means (TEP) for exchanging information on said topology of said resilient packet Ring (RPR); and
b. a topology information holding means (THP) for holding information on a topology of said Resilient Packet Ring (RPR) **CHARACTERIZED IN THAT** said exchanging means additionally is adapted to exchange information on a backup node for at least one of said nodes (N1-N8) and that said topology holding table (THP) is additionally adapted to hold said information on said backup node for at least one of said nodes (N1-N8).

4. Node (N1-N8) in Resilient Packet Ring (RPR) according to claim 3, **CHARACTERIZED IN THAT** said node further comprises a packet handling part (PHP), adapted to make a decision on forwarding of a data-packet towards said backup node based on said topology information stored in said topology information holding part (THP).

5. Method for topology discovery in a Resilient Packet Ring according to claim 1, wherein at least two resilient packet rings (RPR1, RPR2) are coupled by at least two links being coupled, respectively, between a first node (A) of a first ring and a second node of a second ring via a first switching device (S1), and a third node (B) of said first ring and a fourth node of said second ring via a second switching device (S2), said first switching device (S1) and said second switching device (S2) each comprising a separate forwarding information holding part (FIHP1, (FIHP2) for holding forwarding information, **CHARACTERIZED IN THAT** said method further comprises the step of synchronising said forwarding information of a forwarding information holding part (FIHP1) of said first switching device with said forwarding information of a forwarding information holding part (FIHP2) of said second switching device for facilitating a first switching device (S1) to operate as a backup switching device of said second switching device (S2) or vice versa.

6. System for topology discovery in a Resilient Packet Ring according to claim 2, wherein at least two resilient packet rings (RPR1, RPR2) are coupled by at least two links being coupled, respectively, between a first node (RN3) of a first ring and a second node (RN8') of a second ring via a first switching device (S1), and a third node (RN4) of said first ring and a fourth node (RN7') of said second ring via a second switching device (S2), said first switching device (S1) and said second switching device (S2) each comprising a separate forwarding information holding part (FIHP1, FIHP2) for holding forwarding information on data-packets of a data-flow, **CHARACTERIZED IN THAT** said system further comprises a at least one synchronising part (SP), adapted to synchronise said forwarding information of a forwarding information holding part (FIHP1) of said first switching device with said forwarding information of a forwarding information holding part (FIHP2) of said second switching device for facilitating a first switching device (S1) to operate as a backup switching device of said second switching device (S2) or vice versa.

7. Switching device (S1, S2) adapted to be used in the system according to claim 6.
